# EUROPEAN PATENT SPECIFICATION

(11) **EP 2 220 743 B1**
(45) Date of publication and mention of the grant of the patent: **05.10.2011**
(21) Application number: 08847965.4
(22) Date of filing: 10.11.2008
(51) Int. Cl.: H02J 7/04, H01M 10/44

(54) **PROCESS AMD CONNECTION LAYOUT FOR RECHARCHING BATTERIES HAVING ADHERENT OR SOAKED ELECTROLYTE**
PROZESS UND VERBINDUNGSLAYOUT ZUM WIEDERAUFLADEN VON BATTERIEN MIT FESTHAFTENDEM ODER DURCHTRÄNKTEM ELEKTROLYT
PROCÉDÉ ET TOPOLOGIE DE CONNEXION POUR LA RECHARGE D'ACCUMULATEURS COMPRENANT UN ÉLECTROLYTE ADHÉSIF OU IMPRÉGNÉ

(30) Priority: 08.11.2007 HU 0700673
(43) Date of publication of application: 25.08.2010
(73) Proprietor: Balázs, Tamásné, 1098 Budapest (HU); Horváth, József, 2310 Szigetszentmiklós (HU); Kincses, János, 2030 Érd (HU); Mohos, Tamás, 8200 Veszprém (HU); Szentiványi, János, 1054 Budapest (HU)
(72) Inventor: Balázs, Tamás, 1052 Budapest (HU); Horváth, József, 2310 Szigetszentmiklós (HU); Kincses, Janós, 2030 Érd (HU); Mohos, Tamás, 8200 Veszprém (HU); Szentiványi, János, 1054 Budapest (HU)
(74) Representative: Szabo, Zsolt
(86) International application number: PCT/HU2008/000131
(87) International publication number: WO 2009/060248

(56) References cited:
- EP-B- 1 396 061
- WO-A-01/06614
- HU-B1- 225 573
- US-A- 4 947 124
- US-A- 5 587 924
- CHAMPLIN K S ET AL: "Discrete frequency immittance spectroscopy (DFIS/sup TM) a new technique for battery instrumentation" APPLICATIONS AND ADVANCES, 2001. THE SIXTEENTH ANNUAL BATTERY CONFEREN CE ON 9-12 JANUARY 2001, PISCATAWAY, NJ, USA,IEEE, 9 January 2001 (2001-01-09), pages 111-116, XP010532837 ISBN: 978-0-7803-6545-2 cited in the application
- CHAMPLIN K S ET AL: "A fundamentally new approach to battery performance analysis using DFRA<TM>/DFIS <TM> technology" TELECOMMUNICATIONS ENERGY CONFERENCE, 2000. INTELEC. TWENTY-SECOND INT ERNATIONAL SEPTEMBER 10-14, 2000, PISCATAWAY, NJ, USA,IEEE, 10 September 2000 (2000-09-10), pages 348-355, XP010523211 ISBN: 978-0-7803-6407-3 cited in the application

## Description

The present invention relates to the charging process of batteries having adherent or soaked (or absorbed) electrolyte. In particular, it is related to the charging of such batteries to the full capacity through deep- and fast-charging. The invention also relates to a connection layout to be used in the process.

A part of the known solutions is based on the monitoring of limit values for the direct voltage and current (dc voltage and current, from now on), as well as temperature. To charge batteries, such a solution is disclosed in Hungarian Patent No. 223,696B.

More advanced processes make use of a dc pulse charging along with the monitoring of similar limit values. Such a solution is disclosed e.g. in Hungarian Patent No. 225,573B for charging batteries. According to this, during the charging of a battery a first charging period composed of at least one series of current pulses is applied, wherein the frequencies of the current pulses practically correspond to the resonance frequency of the battery to be charged. After said first charging period, a resting period is performed, into which a discharging period is inserted. After completion of the first charging period, the battery is charged for a certain period by a continuous charging current and then a second resting period is applied, into which again a discharging period is inserted. To charge the battery, this cycle is repeated continuously. The resonance frequency is defined by the frequency at which the amplitude (as a function of frequency) of the series of charging current pulses is at maximum value. The peak current of the applied current pulses ranges from 1C to 7C, wherein "C" denotes the ampere-hour (Ah) capacity unit of the battery at issue.

The basis for the charging process discussed in Hungarian Patent No. 225,573B is that at the resonance frequency of the battery a plurality of the routine charging current can be applied without inducing thereby a greater amount of heat generation and damaging the battery. Simultaneously, an intensive inner molecular motion can be induced on the electrodes of the battery that expedites the chemical conversion as well as the charging of the battery.

However, as a result of the investigations performed, the conclusions could be drawn that, on the one hand, said molecular motion cannot be observed and instead a proton exchange takes place and, on the other hand, - as far as the chemical conversion goes - it merely applies to the fact that due to the so-called Wronski effect, a chemical reduction appears on the electrodes, that is, the oxides, the acid or alkali anhydrides return into the electrolyte complex and the plates thereby get cleaned.

A further drawback of the solution disclosed in Hungarian Patent No. 225,573B is that it tries to determine the resonance frequency and/or the duty factor of the square pulse signals experimentally which is rather inaccurate. Our studies revealed that to induce the proton exchange fast-charging without doing harm to the battery, the full width at half maximum (FWHM) of the resonance frequency and the factor of quality (Q-factor) must be determined in a highly precise manner, preferentially with the accuracy of ±2%.

In Hungarian Patent No. 225,573B, the possibility of fast-charging of Lithium-ion type batteries is mentioned as an additional advantage. Due to the segregation of lithium, this kind of battery cannot be charged by this technique, i.e. no proton exchange can take place. Hereby, it should also be noted that the chemical conversion does not expedite the charging of the battery since fast-charging can occur merely as a result of the proton exchange and not due to the molecular drift.

The aim of the present invention is to provide a process and a device which can also make use of renewable energy with an outstanding efficiency in the form of electrical energy. In particular, the aim of the present invention is to provide a technical solution, both as a process and a device, of high safety for charging batteries having adherent or soaked electrolyte, as well as to eliminate the drawbacks of the previously discussed solution.

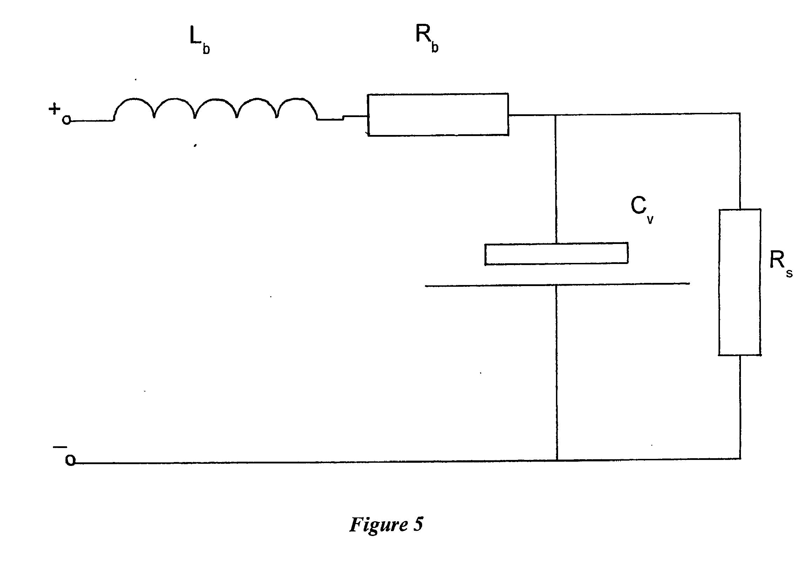

The inventive charging process and connection layout are based on the findings that every single battery has got a specific resonance frequency that is characteristic of the battery itself. This can be easily understood from the fact that any battery, as a consequence to its geometrical arrangement, has got an inductivity (L_{b}) and a virtual capacitance (Cᵥ); the latter coming from the amount of electrical charge (through the relation Q=I×t=C×U -> C=I×t/U). Said inductivity and virtual capacitance form a resonant circuit that can also be considered as an equivalent circuit diagram for the battery as shown in Figure 5.

Despite the fact that it is a resonant circuit with a very low Q-factor, the resonance frequency of the equivalent resonant circuit can be determined. If charging energy is transferred to the battery at this resonance frequency, it will, in principle, convert the electrical energy within zero time into chemical energy. Due to the losses emerging in practice, said conversion time is, however, non-zero but always of a given length.

On the basis of the equivalent resonant circuit one can immediately concede that the battery has got serial internal resistances and parallel self-discharge resistances. As charging is performed by a superposed ac current, current displacement that is highly frequency dependent and impairs the efficiency of recharge should also be taken into account.

This phenomenon was discovered by Z. S. Wronski in 1999. According to its burden, if the magnitude of the charging current exceeds the value of 2.5C but remains below 4C, proton exchange sets in. Moreover, the molecular drift which is known from the dc charging and leads to oxidation and heating-up does not appear within this range. In the case of proton exchange that sets in when charging is performed by an alternating current (ac charging, from now on), heating-up of the battery, that actually deteriorates it, does not occur. Our measurements have also proven that fast-charging by proton exchange (i.e. the Wronski effect) does not take place below 2.5C and, in turn, molecular drift recovers above 4C, the latter might be accompanied by fire and explosion risks.

Hence, the virtual capacitance of a relatively well-spread battery (10 Ah, 12 V) is 3000 F, while its inductivity L_{b} is 1.33 nH at a resonance frequency of about 500 Hz. Hence, it is clear that no traditional resonance measuring techniques can be used to determine the resonance frequency of such a battery. Consequently, according to the inventive process the technique of Digital Frequency Response Analysis (DFRA, from now on) is applied for determining the resonance frequency of the battery to be charged. The DFRA technique is a *per* se known technique, for the details thereof the reader is referred to the publication of K. S. Champlin and K. Bertness (see Conference Proceedings of lNTELEC 2000, pp. 348 to 355).

It is also a well-known fact that the value of the resonance frequency concerned is continuously changing when the battery is charged, and hence the knowledge of said frequency with a sufficient accuracy requires the continuous monitoring thereof.

US 5587924A discloses a system in which the capacity of a battery is determined by a white noise discharge and a comparison of the results with a look up table to determine the capacity.

Hence, the above aims for providing a process for deep- and fast-charging of batteries having adherent or soaked electrolyte to the full capacity is achieved by the process according to claim 1. Possible preferred variants of the inventive process are set forth in claims 2 to 9. The aim for providing a device for being used with the charging process according to the invention is achieved by an electronic connection layout in accordance with claim 10.

In particular, the subject-matter of the present invention is a process, as well as a connection layout, wherein the discharged battery is subjected to a preliminary pulse-based energy test on the basis of which there is constructed the very first energy packet structure used for the charging, as well as the cycle time for soft-charging depending on the depth charge of the battery. Said preliminary test is needed to decide on whether or not the pH of the electrolyte of the battery conforms to the respective standard, i.e. said pH - as acid density - falls between 1..10 kg/l and 1.28 kg/l. If said pH value is lower than what is mentioned here, the expectable vitality, i.e. the state of being charged of the battery might be insufficient and/or is going to be extremely low. Therefore, the number of full charging cycles will presumably be also a small number.

The step of deep-charging applied in accordance with the present invention, which by a triangular signal of changing width modulates the dc current used for soft-charging and simultaneously applies a formatting discharge (performed along with alternating current direction), can significantly improve the situation. Moreover, said test also indicates whether the charging process of the battery should be commenced with a direct current and/or a superposed alternating current or an analogue PWM RAMP signal. Here and further on, the term "PWM RAMP signal" refers to a triangular signal, wherein the slopes of both the leading edge and the trailing edge can be suitably varied, optionally independently of one another.

The output of a dc current generator is switched on/off and supplied through an analogue modulator circuitry into the battery to be charged. The cycle time of the switch on/off signal is equal to the period of the characteristic frequency supplied by the DFRA circuitry, but the duty factor of the pulse depends on the pulse width defined by the Power Factor Control (PFC) circuitry (for enhancing the efficiency, as it will be discussed later in detail) based on the full width at half maximum at all times or the length of the RAMP signal.

During deep-charging of the battery, the energy required by the nucleation process of the stable crystals of the solid phase end product formed as a result of the reactions taking place within the battery is fed in. This energy is produced by the electronics implementing the PFC circuitry in such a way that a dual modulator applies an ac analogue signal of the resonance frequency simultaneously to the positive and negative poles of the battery in the form of current signals shifted by 90° in phase relative to one another. As a consequence of the difference current generated in this way, the energy arises directly within the cell of the battery itself. This, however, differs from the case when a current having the same magnitude as that of said difference current is made to flow through the battery. Contrary to the application of a dc current value corresponding to a traditional long time trickle charging, in this way said deep-charging can be accomplished in a short time.

The magnitude of the energy packet calculated by the control computer depends on the integrate of the charging current. The magnitude of the charging current can be at least 2.5C and at most 3.5C to 4C.

Our studies led us to the conclusion that after at most eight charging cycles, completing a new data correction is required in every case relying upon DFRA. The energies of said pulse packets are summed up and then compared to the expectable energy-storing capacity of the battery by the control processor. The testing takes place by connecting an ohmic dummy load to the battery. Due to a discharging current, that is identical with the C value all the times, the open-circuit terminal voltage of the battery drops; this voltage value is sensed by the processor. If the controller finds said sensed value low, charging of the battery continues. On the basis of a repeated measuring cycle, the processor then checks whether or not the terminal voltage has increased further.

At the end of the process, the processor informs the user about the fact that the vitality of the recharged battery will be 100% no more. It should be noted that such an event does, however, not occur when new batteries are considered.

In what follows, the invention is discussed in detail with reference to the attached drawings, wherein
- Figure 1 illustrates schematically the preliminary testing of a battery having adherent or soaked electrolyte, as well as the steps of a charging process according to the present invention of said battery;
- Figure 2 shows the temporal evolution (timing) of the discharging step of the charging process of said battery;
- Figure 3 shows a possible preferred variant of the current pulse series applied in the soft-charging step of the charging process of said battery as a function of time taken;
- Figure 4 illustrates the cycle time used in the fast-charging step of the charging process of said battery;
- Figure 5 is the equivalent circuit diagram of a battery to be charged by the charging process according to the invention; and
- Figure 6 is the skeleton diagram of a possible embodiment of the electronic circuitry used for performing the charging process according to the invention.

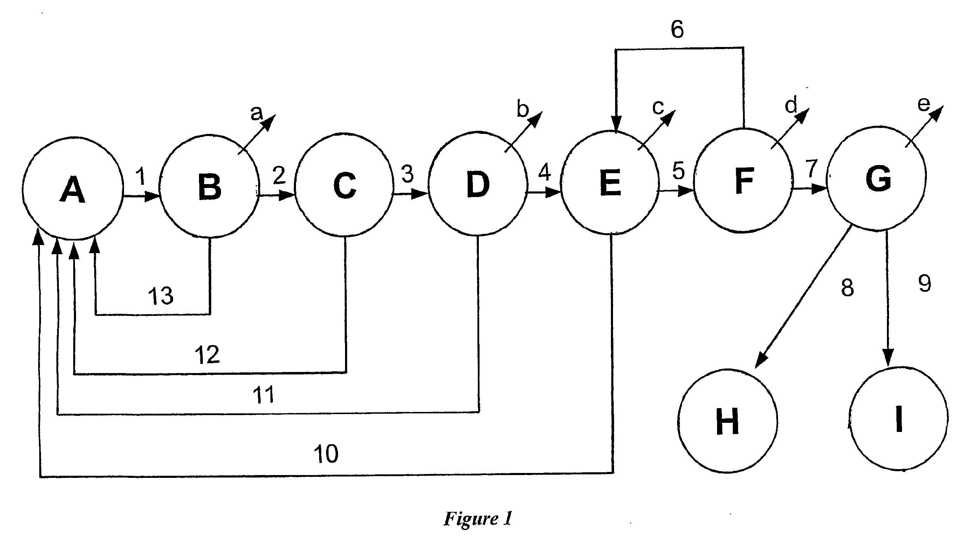

Figure 1 shows schematically in the form of a block diagram the testing and the course of recharging a battery. As it can be seen in Fig. 1, the charging process according to the present invention is performed through several consecutive steps (or states), wherein the crossing between each individual state depends on the fact whether or not certain sensed parameters of the battery being just charged satisfy the pre-set relations that will be discussed below in more detail.

The charging process according to the invention is performed through the following states: a state [A] considered as the initial or base state, a state [B] aiming at the performance of a discharge test of the battery to be charged, a state [C] aiming at an arrangement for performing deep-charging, a soft-charging state [D] for effecting soft-charging of the battery, a state [E] comprising the determination of the characteristic frequency (or resonance frequency) of the battery by means of DFRA, a state [F] for effecting fast-charging of the battery, a so-called maintenance state [G], as well as so-called rapid and slow maintenance states [H] and [I], respectively. In what follows, the operations performed in each of the states enlisted above are discussed in detail.

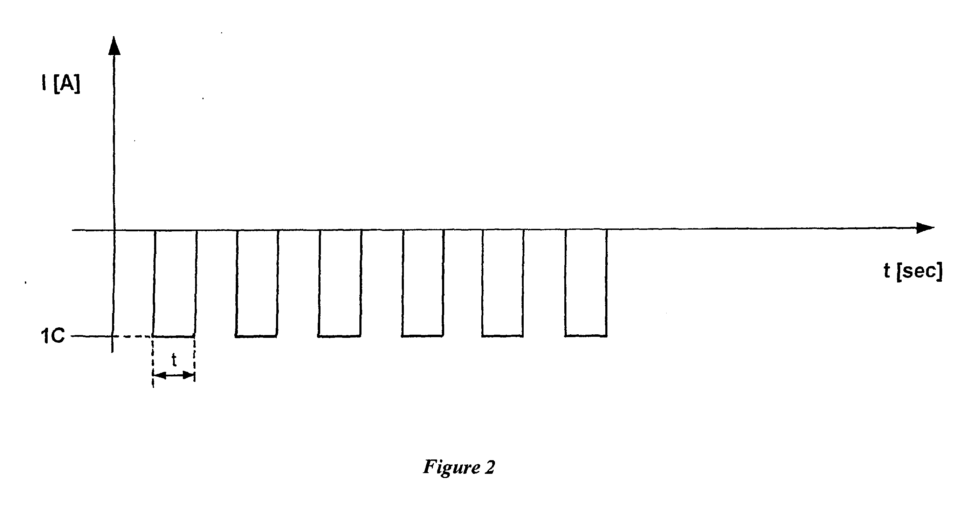

In state [A] it is checked whether or not the relation Uₒᵤₜ > Uₘᵢₙ holds (here and further on, voltages Uₒᵤₜ and Uₘᵢₙ stand for the voltage measured in the offload state and the deep discharge voltage, respectively; if the terminal voltage Uₖ drops below these voltages, its value can be restored merely at the cost of a decrease in the nominal Ah-value of the battery). If the answer is yes, a progress into state [B] along graph edge 1 of Fig. 1 takes place, wherein the battery is subjected to a discharge by an output signal (a) comprising preferably six pulses, each having a width of t = 100 msec, a duty cycle of 1/1 and an amplitude of 1 C as shown in Fig. 2.

Thereafter, the voltage Uₒᵤₜ is checked again. If the relation Uₒᵤₜ < Uₘᵢₙ holds, a return into state [A] along graph edge 13 of Fig. 1 takes place. If, however, the relation Uₒᵤₜ > Uₘᵢₙ holds, to arrange deep-charging, a progress into state [C] along graph edge 2 of Fig. 1 takes place. If in said state [C] the depth charge on a time basis is small, a return to the (base) state [A] along graph edge 12 of Fig. 1 takes place. The depth charge is considered to be small on a time basis when the difference between the so-called absorption voltage Uₘₐₓ (which is preferably 14.4 V) and the terminal voltage Uₖ, wherein this latter is measured at the discharge rate of 1 C, is at most 2.4 V.

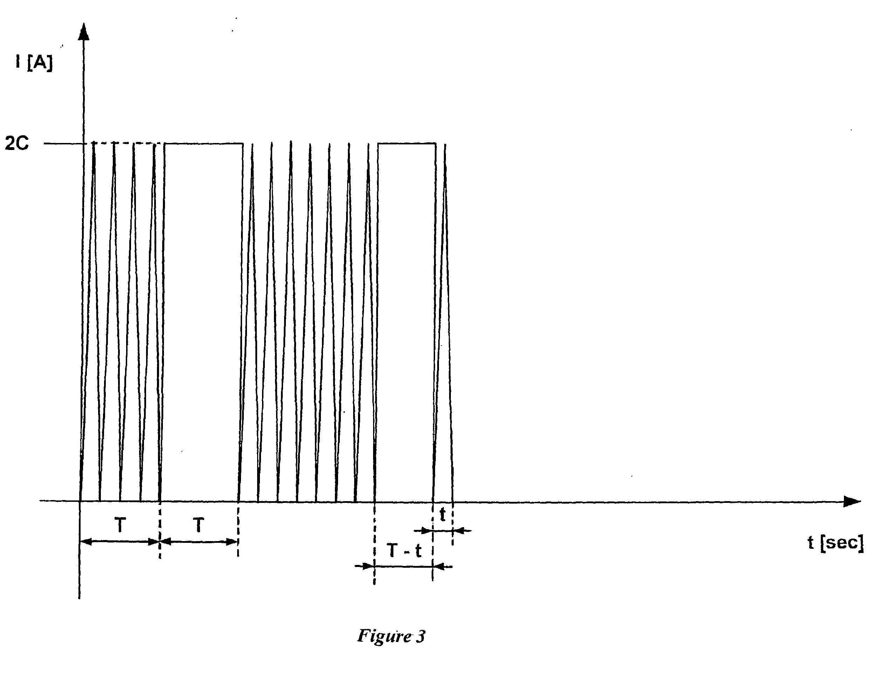

If Uₒᵤₜ > Uₘᵢₙ, a progress into state [D] along graph edge 3 of Fig. 1 takes place, wherein a conditioning soft-charging is performed by an output signal (b) with the waveform shown in Fig. 3. Here, pulse charging and dc charging are applied in an alternating manner along with the insertion of dc sections becoming shorter and shorter in length until the dc charging sections completely disappear and the pulse charging section becomes continuous by the period of T.

In state [D], the gradient of voltage Uₒᵤₜ is measured. If this has got an increasing character, meaning that the battery being just charged is already over the initial transient phase (i.e. the so-called "curve of drunkenness"), a progress into state [E] along graph edge 4 of Fig. 1 takes place.

In state [E], a discharge signal for discharging the virtual resonant circuit of the battery, represented by a white noise WIN current pulse having a bandwidth of 0-10 MHz, an amplitude of 0.1C, as well as a length ranging preferably from at least t₁ = 1 msec to at most t₁ = 10 msec, is applied to said virtual resonant circuit (i.e. it is "tinkled" by said pulse), and the resonance frequency fₒ is set in the knowledge of the response function. For this, white noise is generated as a white noise voltage with a broad range that appears on the base-emitter junction of a pnp transistor driven by a current generator. The thus obtained white noise is transmitted through a Murata type high cut-off low-pass ceramic filter that generates the noise voltage having the bandwidth of 0-10 MHz by limiting the noise of "infinite" frequency at the frequency of at least 10 MHz. By making use of the present frequency-limited noise voltage that is subjected to a further amplification and gated into a pulse with a width of 1-10 msec, an analogue field effect transistor (FET) is controlled. In this way, the noise pulse with a width of 1-10 msec and having a bandwidth of at most 10 MHz is applied to the battery through a resistance representing a current value of 1 C, thereby virtually tinkling the battery, as resonant circuit. It is known that the greatest current flows at the resonance frequency f₀ of the resonant circuit. Therefore, the amplitude distribution belonging to the resonance frequency of the response function leads to a voltage that differs from the voltages at other frequencies. Thus, pieces of information with regard to the magnitude of the voltage at the resonance frequency f₀, as well as to the factor of quality (Q-factor) and to the full width at half maximum of the resonant circuit representing the battery are obtained. Additionally, information is also obtained regarding e.g. such an issue whether or not the PFC circuitry should be switched on. The data required for servicing the PFC circuitry are set on the output (c) of state [E] on the basis of the full width at half maximum value obtained. In state [E], the determination of the resonance frequency f₀ is accomplished by DFRA as a spectrum analysis of the voltage signal carried out by the microprocessor. After having defined the resonance frequency f₀, a progress into state [F] along graph edge 5 of Fig. 1 takes place.

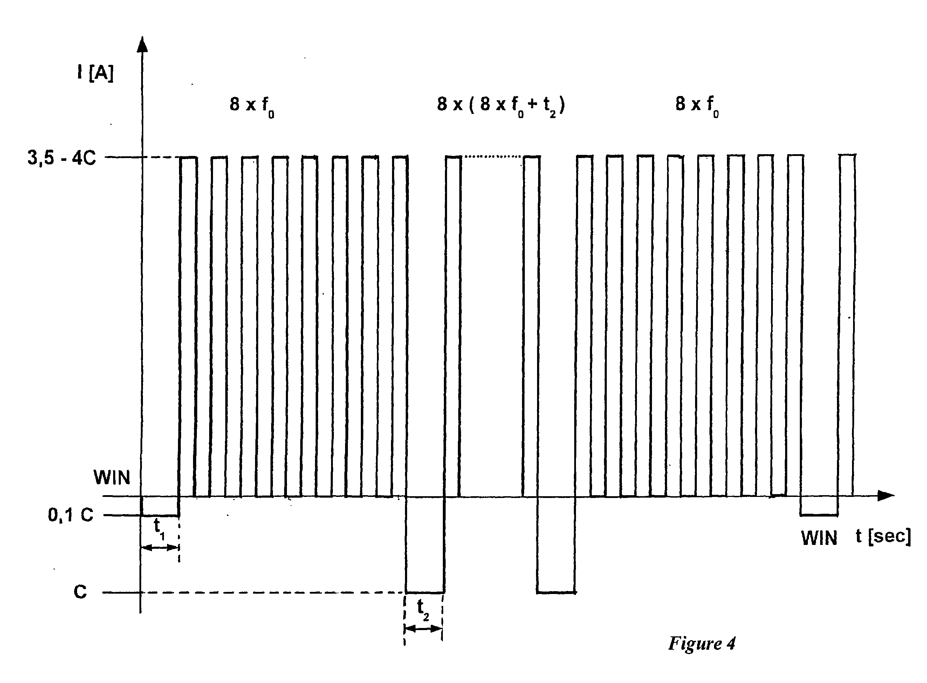

On the output (d) of state [F], a waveform comprising eight PFC charging pulses, each having a frequency corresponding to the resonance frequency f₀ and a peak current of at most 3.5-4C, and a single discharging pulse of a length t₂ = 0.1 msec and an amplitude of 1 C is generated in accordance with Fig. 4 and repeated preferably eight times one after the another. With this signal, charging of the battery to be charged is performed. Then, the voltage Uₒᵤₜ is checked again. If the relation Uₒᵤₜ < Uₘₐₓ holds, a return into state [E] along graph edge 6 of Fig. 1 takes place. The fast-charging cycle applied in state [F] is repeated until the relation Uₒᵤₜ> Uₘₐₓ gets satisfied, and when this occurs, a progress into state [G] along graph edge 7 of Fig. 1 takes place, wherein the completion of fast-charging is indicated on output (e) acoustically and by displaying visually.

If the voltage drop due to self discharge is high, a progress from state [G] into the rapid maintenance state [H] along graph edge 8 of Fig. 1 takes place. If, however, the voltage drop due to self discharge is low, a progress from state [G] into slow maintenance state [I] along graph edge 9 of Fig. 1 takes place. These latter two states are maintained for at most thirty minutes.

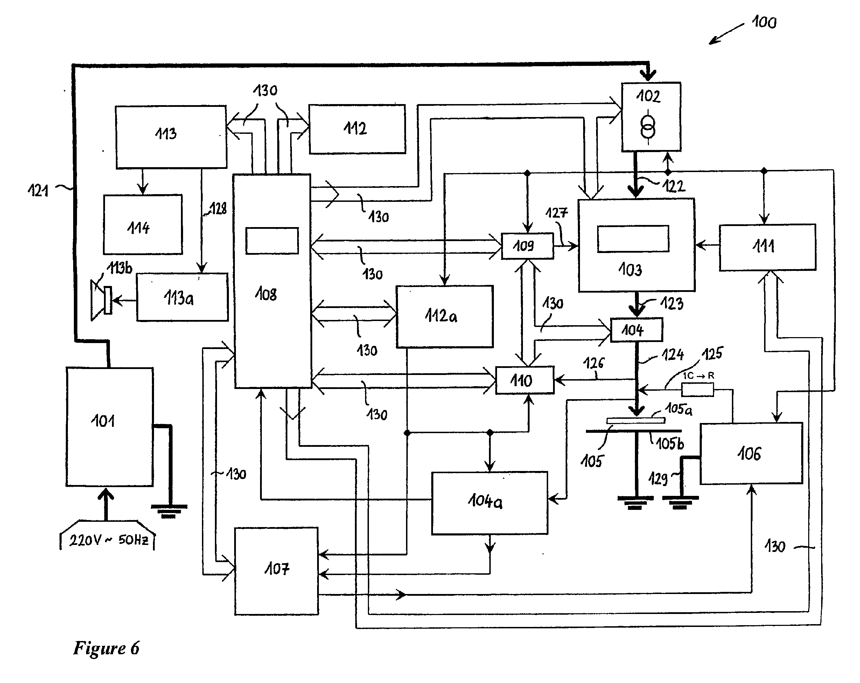

Figure 6 schematically shows, as a skeleton diagram, a preferred embodiment of the connection layout 100 of an electronic circuitry for carrying out the charging process according to the present invention. Said connection layout 100 comprises a switched-mode power supply unit 101 coupled to an ac main supply, a switched-mode dc current generator 102, a power pulse modulator 103, a charging current detection unit 104, preferably in the form of a Hall probe, a level control system 104a for monitoring the phase of the charging current, a discharge circuitry 106, a battery charging reference processor 107, a controlling multiprocessor central unit 108, a Power Factor Control (PFC) circuitry 109, a digital frequency response analyser 110, a programmed frequency generator (synthesiser) 111, a state indicator 112 and an EPROM control 112a, as well as an intelligent function display unit 113 and a display 114, with preferably light-emitting diodes (LEDs), connected to the function display unit 113, as well as a sound regulating and terminal position indicating circuitry 113a and a loudspeaker 113b connected to the latter. As it is shown in Fig. 6, a battery 105 to be charged, having positive electrode 105a and negative electrode 105b, is connected electrically to the connection layout 100. Through their suitable input and output terminals that are not shown in the drawings, the above enumerated subunits/units are connected to one another via electrical connections (shown by black arrows) and data communication links (preferably provided in the form of one or more I/O data buses; represented by thick empty arrows).

In what follows, the function and the operation of the major parts of the connection layout 100 according to the invention are discussed in more detail.

In the main circuitry of the connection layout 100, the switched-mode dc current generator 102 is energized by the switched-mode power supply unit 101 coupled to the ac main supply via a connection 121 connecting said units together electrically. The output of the current generator 102 is connected to the power pulse modulator 103 via an electrical connection 122. The output of the modulator 103 is connected to the charging current detection unit 104 via an electrical connection 123. The output of the charging current detection unit 104 is connected to the positive electrode 105a of the battery 105 via an electrical connection 124. The negative electrode 105b of the battery 105 is connected to the negative pole and/or the ground of said connection layout 100. The positive electrode 105a of the battery 105 is connected to the discharge circuitry 106 via an electrical connection 125 which, in turn, is also connected to the negative pole and/or the ground via an electrical connection 129.

The above detailed main circuitry is controlled by the controlling central unit 108 via an I/O data bus 130. More particularly, via said I/O data bus 130, the central unit 108 governs the switched-mode dc current generator 102, the power pulse modulator 103, as well as the PFC circuitry 109, the output of which is connected to a PFC input of the power pulse modulator 103 via an electrical connection 127. The controlling central unit 108 detects via the same I/O data bus 130 the magnitude of the amplitude of the charging current appearing on the remote transmitter output of said charging current detection unit 104. Said I/O data bus 130 also reads out the EPROM control 112a and is connected to the digital frequency response analyser 110 as well. Said digital frequency response analyser 110 directs the programmed frequency generator 111 to the cycle time of the next charging pulse packet. Via line 126, the input of the digital frequency response analyser 110 detects the damping in the resonant circuit appearing over line 124 of the battery 105. The control input of the discharge circuitry 106 is also connected to the I/O data bus 130, the traffic over said I/O data bus 130 is under the control of the battery charging reference processor 107. The state of said I/O data bus 130 is shown in the display 114, while the terminating position of the function display unit 113 is coupled to the terminal position indicating circuitry 113a via a connection 128 and the function display unit 113 signals through the loudspeaker 113b.

The invention is especially useful for such battery applications, wherein a long term energy interruption is not tolerated from the point of view of the recovery of power supply. Such applications are e.g. the uninterruptible power supplies, cellular phones, electrical vehicles, emergency power supplies, battery-operated hand tools, various safety-technological apparatuses and traffic-technological devices, as well as inverters of various voltages.

An additional advantage of the solution according to the present invention is that a superposed ac charging increases the service life of a battery to about 2.5-3 times of its nominal service life, as during charging said charging reduces the oxides and sulphates produced on the electrodes. Consequently, a smaller number of batteries will be required, and hence the heavy metal load to the surroundings can significantly decrease; namely, in the case of acidic and alkaline batteries, lead and nickel/cadmium, respectively, pollute heavily the ambient environment.

## Claims

1. A process for deep- and fast-charging of a battery having adherent or soaked electrolyte at the resonance frequency (f₀) of said battery, ***characterized in* that** it comprises the steps of applying a discharge signal of white noise (WIN) current to the battery (105) to be charged and subjecting a response signal of said battery (105) to a digital frequency response analysis (DFRA), defining thereby the actual resonance frequency (f₀) being characteristic to said battery (105); applying a second charging waveform to the positive electrode (105a) of the battery (105), said second charging waveform comprising a superposed alternating current pulse series of a frequency corresponding to said resonance frequency (f₀) and a subsequent single discharging pulse, wherein before the application of said second charging waveform, applying a first charging waveform to the positive electrode (105a) of the battery (105), said first charging waveform being generated as a charging waveform comprising initially a section of pulses and a section of dc charging, said sections being of equal temporal length and finally, as a result of gradually decreasing the temporal length of the section of said dc charging, merely a section of pulses.

2. The process of claim *1,* ***characterized in* that** the pulses applied in the section of pulses of the first charging waveform are generated as triangular signals with leading and trailing edges of variable slopes ("RAMP signals").

3. The process of claim 2, ***characterized in* that** the slopes of the leading and trailing edges are set by means of a Power Factor Control circuitry (109).

4. The process according to any of claims 1 to 3, ***characterized in* that** said gradual decrease of the temporal length of the section of dc charging of the first charging waveform is performed in equidistant steps.

5. The process according to any of claims 1 to 4, ***characterized in* that** said discharge signal of white noise (WIN) current is provided by a pulse having an amplitude of 0.1 C, a bandwidth of 0-10 MHz and a length of t₁ = 1 msec.

6. The process according to any of claims 1 to 5, ***characterized in* that** the pulse series of the second charging waveform comprises eight pulses, each having a peak current of at most 3.5-4C.

7. The process according to any of claims 1 to 6, ***characterized in* that** said discharging pulse in the second charging waveform is a pulse having a length of t₂ = 0.1 msec and an amplitude of 1C, and being used to detect the actual capacity of the battery (105) to be charged.

8. The process according to any of claims 1 to 7, ***characterized in* that** the second charging waveform is applied eight times one after the other along with applying said discharge signal of white noise (WIN) current to the battery (105) therebetween.

9. The process according to any of claims 1 to 8, ***characterized in* that** the application of said first and second charging waveforms is repeated until full capacity of the battery (105) is reached.

10. A connection layout (100) for deep- and fast-charging of a battery (105) having adherent or soaked electrolyte, ***characterized in* that** it comprises a switched-mode power supply unit (101) coupled to an ac main supply, a switched-mode dc current generator (102), a power pulse modulator (103), a charging current detection unit (104), a discharge circuitry (106) and a control circuitry, wherein
- via electrical connections (121, 122, 123, 124, 125), the output of said power supply unit (101) is connected to the dc current generator (102), the output of said current generator (102) is connected to the power pulse modulator (103), the output of said modulator (103) is connected to the charging current detection unit (104), the output of said charging current detection unit (104) is connected to the positive electrode (105a) of the battery (105) and to the discharge circuitry (106), and wherein
- said control circuitry comprises a battery charging reference processor (107), a controlling central unit (108), a Power Factor Control circuitry (109), and a digital frequency response analyser (110), as well as an I/O data bus (130) for providing a data communication link, wherein
- said controlling central unit (108) is coupled to the dc current generator (102), the power pulse modulator (103) and the Power Factor Control circuitry (109) via said I/O data bus (130), and
- the output of said Power Factor Control circuitry (109) is connected to the Power Factor Control input of said modulator (103) via electrical connection (127), and is further coupled to the remote transmission output of said charging current detection unit (104) and to the digital frequency response analyser (110) via said I/O data bus (130), and
- the input of said digital frequency response analyser (110) is connected through a line (126) to the line (124) of the battery (105), and
- the control input of said discharge circuitry (106) is coupled to said I/O data bus (130), and
- said battery charging reference processor (107) is in communication with the controlling central unit (108) via said I/O data bus (130).

## Patentansprüche

1. Verfahren zum Tief- und Schnellladen einer Batterie mit anhaftendem oder aufgesaugtem Elektrolyt bei der Resonanzfrequenz (f₀) der Batterie, ***dadurch gekennzeichnet, dass*** es folgende Schritte umfasst: Anlegen eines Entladesignals eines weißes Rauschen (WIN) aufweisenden Stroms an die zu ladende Batterie (105) und Unterziehen eines Antwortsignals der Batterie (105) einer digitalen Frequenzganganalyse (DFRA), wodurch die Ist-Resonanzfrequenz (f₀) definiert wird, die für die Batterie (105) charakteristisch ist; Anlegen einer zweiten Ladewellenform an die positive Elektrode (105a) der Batterie (105), wobei die zweite Ladewellenform eine überlagerte Wechselstromimpulsfolge einer der Resonanzfrequenz (f₀) entsprechenden Frequenz und einen nachfolgenden einzigen Entladeimpuls umfasst, wobei vor der Anlegung der zweiten Ladewellenform eine erste Ladewellenform an die positive Elektrode (105a) der Batterie (105) angelegt wird, wobei die erste Ladewellenform als eine Ladewellenform erzeugt wird, die Folgendes umfasst: anfangs einen Abschnitt von Impulsen und einen Abschnitt einer Gleichstromladung, wobei die Abschnitte eine gleiche zeitliche Länge aufweisen, und zum Schluss infolge einer schrittweisen Abnahme der zeitlichen Länge des Abschnitts der Gleichstromladung lediglich einen Abschnitt von Impulsen.

2. Verfahren nach Anspruch 1, ***dadurch gekennzeichnet, dass*** die Impulse, die in dem Abschnitt von Impulsen der ersten Ladewellenform angelegt werden, als dreieckförmige Signale mit Anstiegs- und Abfallflanken mit veränderlichen Steilheiten ("Rampensignale") erzeugt werden.

3. Verfahren nach Anspruch 2, ***dadurch gekennzeichnet, dass*** die Steilheiten der Anstiegs- und Abfallflanken mittels einer Leistungsfaktor-Steuerschaltung (109) eingestellt werden.

4. Verfahren nach irgendeinem der Ansprüche 1 bis 3, ***dadurch gekennzeichnet, dass*** die schrittweise Abnahme der zeitlichen Länge des Abschnitts der Gleichstromladung der ersten Ladewellenform in gleichabständigen Schritten durchgeführt wird.

5. Verfahren nach irgendeinem der Ansprüche 1 bis 4, ***dadurch gekennzeichnet, dass*** das Entladesignal des weißes Rauschen (WIN) aufweisenden Stroms durch einen Impuls mit einer Amplitude von 0,1 C, einer Bandbreite von 0-10 MHz und einer Länge von t₁ = 1 msec bereitgestellt wird.

6. Verfahren nach irgendeinem der Ansprüche 1 bis 5, ***dadurch gekennzeichnet, dass*** die Impulsfolge der zweiten Ladewellenform acht Impulse umfasst, die jeweils einen Maximalstrom von höchstens 3,5-4 C aufweisen.

7. Verfahren nach irgendeinem der Ansprüche 1 bis 6, ***dadurch gekennzeichnet, dass*** der Entladeimpuls in der zweiten Ladewellenform ein Impuls ist, der eine Länge von t₂ = 0,1 msec und eine Amplitude von 1 C aufweist und zur Erfassung der Ist-Kapazität der zu ladenden Batterie (105) verwendet wird.

8. Verfahren nach irgendeinem der Ansprüche 1 bis 7, ***dadurch gekennzeichnet, dass*** die zweite Ladewellenform achtmal hintereinander angelegt wird zusammen mit dem Anlegen des Entladesignals des weißes Rauschen (WIN) aufweisenden Stroms an die Batterie (105) dazwischen.

9. Verfahren nach irgendeinem der Ansprüche 1 bis 8, ***dadurch gekennzeichnet, dass*** die Anlegung der ersten und zweiten Ladewellenform wiederholt wird, bis die volle Kapazität der Batterie (105) erreicht wird.

10. Anschlussanordnung (100) zum Tief- und Schnellladen einer Batterie (105) mit anhaftendem oder aufgesaugtem Elektrolyt, ***dadurch gekennzeichnet, dass*** sie ein an die Wechselstromnetzversorgung gekoppeltes Schaltnetzgerät (101), einen Gleichstromgenerator (102) im Schaltbetrieb, einen Leistungsimpulsmodulator (103), eine Ladestromerfassungseinheit (104), eine Entladeschaltung (106) und eine Steuerschaltung umfasst, wobei
- über elektrische Anschlüsse (121, 122, 123, 124, 125) der Ausgang des Netzgeräts (101) an den Gleichstromgenerator (102) angeschlossen ist, der Ausgang des Stromgenerators (102) an den Leistungsimpulsmodulator (103) angeschlossen ist, der Ausgang des Modulators (103) an die Ladestromerfassungseinheit (104) angeschlossen ist, der Ausgang der Ladestromerfassungseinheit (104) an die positive Elektrode (105a) der Batterie (105) und an die Entladeschaltung (106) angeschlossen ist, und wobei
- die Steuerschaltung einen Batterielade-Referenzprozessor (107), eine steuernde Zentraleinheit (108), eine Leistungsfaktor-Steuerschaltung (109) und einen digitalen Frequenzganganalysator (110) sowie einen I/O-Datenbus (130) zur Bereitstellung einer Datenkommunikationsverbindung umfasst, wobei
- die steuernde Zentraleinheit (108) über den I/O-Datenbus (130) an den Gleichstromgenerator (102), den Leistungsimpulsmodulator (103) und die Leistungsfaktor-Steuerschaltung (109) gekoppelt ist, und
- der Ausgang der Leistungsfaktor-Steuerschaltung (109) über einen elektrischen Anschluss (127) an den Leistungsfaktor-Steuereingang des Modulators (103) angeschlossen ist und ferner über den I/O-Datenbus (130) an den entfernten Übertragungsausgang der Ladestromerfassungseinheit (104) und an den digitalen Frequenzganganalysator (110) gekoppelt ist, und
- der Eingang des digitalen Frequenzganganalysators (110) durch eine Leitung (126) an die Leitung (124) der Batterie (105) angeschlossen ist, und
- der Steuereingang der Entladeschaltung (106) an den I/O-Datenbus (130) gekoppelt ist, und
- der Batterielade-Referenzprozessor (107) über den I/O-Datenbus (130) mit der steuernden Zentraleinheit (108) in Verbindung steht.

## Revendications

1. Procédé de chargement poussé et rapide d'une batterie ayant un électrolyte adhésif ou imprégné à la fréquence de résonance (f₀) de ladite batterie, ***caractérisé en ce* qu'**il comprend les étapes d'application d'un signal de décharge de courant de bruit blanc (WIN) à la batterie (105) devant être chargée et de soumission d'un signal de réponse de ladite batterie (105) à une analyse de réponse en fréquence numérique (DFRA), définissant ainsi la fréquence de résonance (f₀) réelle étant caractéristique de ladite batterie (105); d'application d'une deuxième forme d'onde de charge à l'électrode positive (105a) de la batterie (105), ladite deuxième forme d'onde de charge comprenant une série d'impulsions de courant alternatif superposées d'une fréquence correspondant à ladite fréquence de résonance (f₀) et une impulsion de décharge unique subséquente, dans lequel, avant l'application de ladite deuxième forme d'onde de charge, l'application d'une première forme d'onde de charge à l'électrode positive (105a) de la batterie (105), ladite première forme d'onde de charge étant générée comme une forme d'onde de charge comprenant initialement une section d'impulsions et une section de charge cc, lesdites sections étant de longueur temporelle égale et enfin, en résultat d'une diminution graduelle de la longueur temporelle de la section de ladite charge cc, uniquement une section d'impulsions.

2. Procédé selon la revendication 1, ***caractérisé en* ce que** les impulsions appliquées dans la section d'impulsions de la première forme d'onde de charge sont générées sous la forme de signaux triangulaires avec des fronts de montée et de descente de pentes variables (« signaux RAMP »).

3. Procédé selon la revendication 2, ***caractérisé en* ce que** les pentes des fronts de montée et de descente sont fixées au moyen d'un circuit de Commande de Facteur de Puissance (109).

4. Procédé selon l'une quelconque des revendications 1 à 3, ***caractérisé en* ce que** ladite diminution graduelle de la longueur temporelle de la section de charge cc de la première forme d'onde de charge est mise en oeuvre par étapes équidistantes.

5. Procédé selon l'une quelconque des revendications 1 à 4, ***caractérisé en* ce que** ledit signal de décharge de courant de bruit blanc (WIN) est fourni par une impulsion ayant une amplitude de 0,1 C, une largeur de bande de 0-10 MHz et une longueur de t₁ = 1 ms.

6. Procédé selon l'une quelconque des revendications 1 à 5, ***caractérisé en* ce que** la série d'impulsions de la deuxième forme d'onde de charge comprend huit impulsions, ayant chacune un courant de pointe d'au plus 3,5-4 C.

7. Procédé selon l'une quelconque des revendications 1 à 6, ***caractérisé en* ce que** ladite impulsion de décharge dans la deuxième forme d'onde de charge est une impulsion ayant une longueur de t₂ = 0,1 ms et une amplitude de 1 C, et étant utilisée pour détecter la capacité réelle de la batterie (105) devant être chargée.

8. Procédé selon l'une quelconque des revendications 1 à 7, ***caractérisé en* ce que** la deuxième forme d'onde de charge est appliquée huit fois l'une après l'autre en même temps que l'application dudit signal de décharge de courant de bruit blanc (WIN) à la batterie (105) entre celles-ci.

9. Procédé selon l'une quelconque des revendications 1 à 8, ***caractérisé en* ce que** l'application desdites première et deuxième formes d'onde de charge est répétée jusqu'à ce que la capacité complète de la batterie (105) soit atteinte.

10. Topologie de connexion (100) pour un chargement poussé et rapide d'une batterie (105) ayant un électrolyte adhésif ou imprégné, ***caractérisée en* ce qu'**elle comprend une unité d'alimentation électrique (101) en mode commuté couplée à une alimentation ca, un générateur de courant cc (102) en mode commuté, un modulateur (103) d'impulsions de puissance, une unité de détection de courant de charge (104), un circuit de décharge (106) et un circuit de commande, dans laquelle
- par l'intermédiaire de connexions électriques (121, 122, 123, 124, 125), la sortie de ladite unité d'alimentation électrique (101) est connectée au générateur de courant cc (102), la sortie dudit générateur de courant (102) est connectée au modulateur (103) d'impulsions de puissance, la sortie dudit modulateur (103) est connectée à l'unité de détection de courant de charge (104), la sortie de ladite unité de détection de courant de charge (104) est connectée à l'électrode positive (105a) de la batterie (105) et au circuit de décharge (106), et dans laquelle
- ledit circuit de commande comprend un processeur de référence de charge de batterie (107), une unité centrale de commande (108), un circuit de Commande de Facteur de Puissance (109), et un analyseur de réponse en fréquence numérique (110), ainsi qu'un bus de données E/S (130) pour créer une liaison de communication de données, dans laquelle
- ladite unité centrale de commande (108) est couplée au générateur de courant cc (102), au modulateur (103) d'impulsions de puissance et au circuit de Commande de Facteur de Puissance (109) par l'intermédiaire dudit bus de données E/S (130), et
- la sortie dudit circuit de Commande de Facteur de Puissance (109) est connectée à l'entrée de Commande de Facteur de Puissance dudit modulateur (103) par l'intermédiaire d'une connexion électrique (127), et est en outre couplée à la sortie de transmission distante de ladite unité de détection de courant de charge (104) et à l'analyseur de réponse en fréquence numérique (110) par l'intermédiaire dudit bus de données E/S (130), et
- l'entrée dudit analyseur de réponse en fréquence numérique (110) est connectée par l'intermédiaire d'une ligne (126) à la ligne (124) de la batterie (105), et
- l'entrée de commande dudit circuit de décharge (106) est couplée audit bus de données E/S (130), et
- ledit processeur de référence de charge de batterie (107) est en communication avec l'unité centrale de commande (108) par l'intermédiaire dudit bus de données E/S (130).
